# EUROPÄISCHE PATENTSCHRIFT

(11) **EP 3 041 763 B1**
(45) Veröffentlichungstag und Bekanntmachung des Hinweises auf die Patenterteilung: **17.04.2019**
(21) Anmeldenummer: 14796670.9
(22) Anmeldetag: 02.09.2014
(51) Int. Cl.: B65D 90/00, B65D 90/10, B65D 88/76, E03B 3/03

(54) **VORRICHTUNG ZUR AUFNAHME, SPEICHERUNG UND ABGABE VON SUBSTANZEN FÜR DEN EINBAU IN DAS ERDREICH**
DEVICE FOR RECEIVING, STORING AND DISPENSING SUBSTANCES, SAID DEVICE TO BE INSTALLED IN THE GROUND
DISPOSITIF DE RÉCEPTION, DE STOCKAGE ET DE DISTRIBUTION DE SUBSTANCES, DESTINÉ À ÊTRE ENTERRÉ DANS LE SOL

(30) Priorität: 05.09.2013 DE 102013014981
(43) Veröffentlichungstag der Anmeldung: 13.07.2016
(73) Patentinhaber: Premier Tech Aqua GmbH, 22145 Hamburg (DE)
(72) Erfinder: VOSS, Wolfgang, 22145 Hamburg (DE)
(74) Vertreter: Klickow & Wetzel PartGmbB
(86) Internationale Anmeldenummer: PCT/DE2014/000444
(87) Internationale Veröffentlichungsnummer: WO 2015/032378

(56) Entgegenhaltungen:
- EP-A1- 2 267 231
- AU-B1- 2005 203 085
- DE-U1- 20 018 080
- US-A1- 2006 285 927

## Beschreibung

Die Erfindung betrifft eine Vorrichtung zur Aufnahme, Speicherung und Abgabe von Substanzen für den Einbau in das Erdreich.

Es ist bekannt, dass zur Aufnahme, Speicherung und Abgabe von Flüssigkeiten, wie zum Beispiel Wasser, Tanks eingesetzt werden, die in das Erdreich eingebracht, d.h. unterirdisch montiert sind. In diesem Zusammenhang werden Tanks eingesetzt, die beispielsweise zylindrisch, kugelförmig, quadratisch oder in einer rautenförmigen Grundfläche ausgestaltet sind. Diese im Stand der Technik bekannten Vorrichtungen sind häufig aus Kunststoff, Metall oder einem Kompositwerkstoff hergestellt.

Infolge des Einbaus dieser Vorrichtungen in das Erdreich werden diese Tanks durch das sie umgebende Erdreich druckbeaufschlagt. Das bedeutet, dass unterirdisch eingebaute Tanks wenigstens zwei Belastungen ausgesetzt sind. Zum einen werden diese Tanks mechanisch belastet durch die Substanz die sich im Inneren des Tanks befindet. Die daraus resultierende Belastung ist eine innen wirkende Druckbelastung. Zum anderen wirkt auf den Tank eine äußere Druckbelastung infolge des umgebenden Erdreichs. Dabei ergibt sich die unterschiedliche Belastung beispielsweise dadurch, dass die physikalischen Eigenschaften des den Tank umgebenden Erdreiches unterschiedlich sind. Es ist beispielsweise möglich, dass aktiver oder passiver Erddruck vorliegt.

Um die Stabilität derartiger Tanks sicherzustellen, werden Versteifungsrippen, Sicken oder lokale Materialversteifungen realisiert. Die DE 19733589 A1 zeigt eine gattungsgemäße Vorrichtung in Form eines zylindrischen Erdtanks, der aus wenigstens zwei Elementen gebildet ist und Versteifungsrippen bzw. Sicken am Umfang der Zylinderfläche aufweist. Eine zweite bekannte, gattungsgemäße Vorrichtung zeigt die DE 10052324 A1. Dieser Erdtank ist in einer bevorzugten Ausführungsform ebenfalls mehrteilig ausgeführt, ist durch einen ringförmigen Grundkörper gekennzeichnet und weist zur Belastungserhöhung Versteifungsrippen auf. Der in DE 10052324 A1 offenbarte Tank hat den Vorteil, dass durch die Versteifungsrippen an der Zylinderfläche bzw. Schlauchfläche keine innerhalb des Tankes angeordneten Stützeinrichtungen erforderlich sind.

Diese bekannten Vorrichtungen sind in mehrerer Hinsicht nachteilig. Ungünstig und kostennachteilig ist, dass zur Montage dieses Tanks erhöhter Aufwand erforderlich ist, zusätzlich können Probleme an den Fügeflächen dieser mehrteiligen Tanks auftreten. Es ist möglich, dass an diesen Dichtflächen Undichtigkeiten entstehen. Außerdem bedeutet die Realisierung von Trennflächen bzw. Dichtungsflächen einen erhöhten Materialeinsatz. Weiterhin nachteilig ist, dass auch infolge der Verwendung von Versteifungsrippen ein erhöhter Materialeinsatz vorliegt. Generell ist es jedoch wünschenswert, dass der Materialeinsatz für diese Tanks möglichst minimal ist. Durch Reduzierung des Materialeinsatzes werden die Materialkosten verringert und durch das reduzierte Tankgewicht sinken gleichfalls Transportkosten. Insbesondere bei kleineren Tanks kann die einteilige Ausführungsform Kostenvorteile dadurch bieten, dass Transport, Lagerung und Montage vereinfacht sind. Bei Tankvolumina von ca. unter 4000 I ist eine einteilige Ausführungsform wünschenswert.

Erdtanks mit unterschiedlichen Gestaltungen werden bereits in der EP 2 267 231 A1 sowie beschrieben. Die Erdtanks gemäß allen vorstehenden Dokumenten besitzen außenseitig Versteifungsrippen, um eine erforderliche mechanische Stabilität des Tanks zu generieren. Die Versteifungsrippen erhöhen sowohl den Produktionspreis als auch das Baugewicht der Erdtanks.

In der US 2006/0285927 A1 wird eine Vorrichtung zur Aufnahme von Substanzen beschrieben, die zum Einbau in das Erdreich vorgesehen ist. Die Vorrichtung besitzt gerundete Wandungssegmente, die außenseitig im Bereich von Wülsten gegeneinanderstoßen. Im Bereich der Wülste werden zur Versteifung radial vorstehende Rippen angeordnet.

Aus der DE 200 18 080 U1 ist ein Erdtank bekannt, bei dem ebenfalls gerundete Wandungssegmente im Bereich nach außen vorstehender Wülste gegeneinanderstoßen. Die Wülste bilden hierbei radial vorstehende Versteifungsbereiche aus.

In der AU 2005 203 085 B1 wird ein weiterer aus gerundeten Segmenten bestehender Tank beschrieben. Diese Segmente sind hierbei jeweils entsprechend von Rohrabschnitten gestaltet. Die Rundungen verlaufen nicht in einer Umfangsrichtung, sondern relativ zu einer vertikalen Längsachse.

Es ist daher Aufgabe der Erfindung, eine Vorrichtung zur Aufnahme, Speicherung und Abgabe von fließ- oder schüttfähigen Substanzen, insbesondere von Flüssigkeiten, wie zum Beispiel Wasser oder Regenwasser, für den Einbau in das Erdreich zu schaffen, welche aus wenigstens zwei Wandungselementen zur Bildung eines Hohlraumes besteht, die eine generelle Verbesserung der Handhabung bei Transport und Montage bietet und eine Minimierung des Materialeinsatzes bei gleichzeitiger Beibehaltung oder Erhöhung der mechanischen Belastung realisiert. Weiterhin ist es Aufgabe der Erfindung, die eingangs beschriebenen Nachteile hinsichtlich der Dichtflächenproblematik zu reduzieren.

Diese Aufgabe wird gemäß Anspruch 1 gelöst.

Die erfindungsgemäße Lehre erkennt, dass durch eine einteilig ausgebildete Tankwandung bestehend aus mehreren gewölbten Wandlungselementen die mechanische Gestaltfestigkeit maximiert werden kann und gleichzeitig der erforderliche Materialeinsatz minimiert wird. Durch die einteilige Ausführungsform werden in Dichtflächenprobleme, die durch einen mehrteiligen Aufbau zwangsläufig auftreten, verhindert.

Der mit der Erfindung erzielte Vorteil besteht darin, dass durch die Ausgestaltung der Tankwandung als wenigstens abschnittsweise realisierte gewölbte Form die Gestaltfestigkeit derart erhöht wird, dass zusätzliche Versteifungselemente in Form von Rippen oder Sicken nicht erforderlich sind. Durch die einteilige Ausführungsform wird eine Konstruktion ohne Dichtflächen oder Fügeflächen unterstützt. Infolge des realisierten verringerten Materialeinsatzes können Tanks auch mit großen Tankvolumina einteilig ausgeführt werden, da der erzielbare reduzierte Materialeinsatz zur Verringerung des Gesamtgewichtes beiträgt.

Der Tank kann aus beliebigen, bekannten Werkstoffen wie zum Beispiel Kunststoff, wie z.B. Polyethylen, glasfaserverstärkter Kunststoff, Metallblech oder einem anderen bekannten Kompositwerkstoff hergestellt sein. Realisiert werden kann der Tank in einem ringförmigen, ideal-ovalförmigen, elliptischen oder einem beliebigen ovalförmigen Aufbau. Den verschiedenen Aufbauten ist gemeinsam, dass sie wenigstens abschnittsweise durch gewölbte Wandungselemente gebildet sind. Die Wandungselemente können bereichsweise oder vollständig konkav oder konvex gewölbt sein. Die Wölbung kann kreisbogenförmig mit konstantem oder variablem Radius ausgebildet sein.

Auch denkbar ist, dass im Sinne eines Korbbogens mehrere sich einander anschließende Kreisbögen mit Radien unterschiedlicher Beträge verwendet werden. In einer weiteren Ausführungsform kann, zum Beispiel belastungsabhängig oder den Herstellungsmöglichkeiten geschuldet, die Wölbung des jeweiligen Wandlungselementes ellipsenförmig ausgestaltet sein. Die Wölbungen können weiterhin durch Freiformflächen gebildet werden. In Abhängigkeit der möglicherweise lokal unterschiedlichen Belastung auf die Tankkonstruktion durch die Flächenpressung des Erdreiches kann der Tank aus unterschiedlichen Wandungselementen gebildet werden, die an den jeweiligen Übergangsstellen von Wandungselement zu Wandungselement einen identischen Querschnitt aufweisen, um die einteilige Ausführung des Tankes zu unterstützen. Diese unterschiedlichen Wölbungen der Wandungselemente können konkav, konvex oder aus einer Kombination von konkaver und konvexer Wölbung realisiert sein, jeweils ist unterschiedliche, auch abschnittsweise veränderliche Form und Radius möglich.

Entscheidend für die Wölbungsform ist, dass die durch das Erdreich aufgebrachten Belastungen auf die Wandung des Tankes je nach Situation und lokal unterschiedlich in einem zur Tankoberfläche schrägen Winkel erfolgen. Dadurch ergibt sich infolge des vorliegenden Kräfteparallelogramms pro Flächenelement sowohl eine (reduzierte) radiale als auch eine querkrafterzeugende axiale Kraftkomponente in Wandungsrichtung bzw. dessen Ebene. Dadurch wird die radiale Kraftkomponente verringert.

Die jeweils an dem Flächenelement auftretende axiale Kraftkomponente wirkt in Richtung der Tankverwandung und erzeugt eine innerhalb der Wandung wirkende Querkraft, die auch Querkraftschub genannt wird. Wesentlich für die Dimensionierung der Tankwandung ist der Betrag der radialen Kraftkomponente. Infolge der konkaven oder konvexen Ausgestaltung der jeweiligen Wandungselemente und der davon abhängigen Winkelverhältnisse innerhalb der Kräfteparallelogramme werden die lokal wirkenden radialen Kräfte reduziert. Die damit einhergehenden Axialkräfte wirken in Längsrichtung der Tankwandung und können betragsmäßig sehr viel höhere Zug- oder Druckbelastungen erzeugen, welche problemlos von dem Wandungsmaterial aufgenommen werden können.

Aufgrund der durch die gewölbten Wandungselemente erzielten erhöhten Gestaltfestigkeit ist es möglich, sowohl auf Abstützungselemente im inneren des Tanks als auch auf Verstärkungsrippen an der Tankwandung vollständig oder zumindest abschnittsweise zu verzichten. Dadurch wird eine ausreichend stabile Konstruktion bei minimiertem Materialeinsatz unterstützt.

In einer ersten bevorzugten Ausführungsform ist der Tank torusförmig ausgeführt. Innerhalb der torusförmigen, d.h. ringartigen Ausgestaltung des Tanks ist dieser durch eine Mehrzahl von Wandungselementen gebildet. Dabei weisen die Wandungselemente einen kreisförmigen Querschnitt in axialer Tankrichtung auf. In radialer Richtung sind die Wandungselemente durch konvexe Wölbungen gebildet. Die einzelnen Wandungselemente sind in identischer Größe und Form ausgeführt. Eine weitere Ausführungsform eines ringförmigen Tanks kann durch unterschiedliche Wandungselemente gebildet werden. Sowohl die Verwendung von konkaven und konvexen Wölbungen der Wandungselemente als auch deren Variation der Formgebung der Wölbungen kann vorliegen. Auch ist es möglich, dass unterschiedlich große Wandungselemente einen torusförmigen Tank bilden.

In einer zweiten bevorzugten Ausführungsform ist der Tank quasi-ovalförmig ausgeführt. Diese quasi-ovale Tankform ist durch unterschiedlich ausgestaltete Wandungselemente gebildet. Auch diese Ausführungsform kann aus Wandungselemente mit konkaver oder konvexer oder einer Kombination aus konkaven und konvexen Wandungselemente um aufgebaut sein. Dabei können sowohl die konkaven als auch die konvexen Wandungselementebereichsweise oder vollständig konkav oder konvex gewölbt sein. Die Wölbung kann kreisbogenförmig mit konstantem oder variablem Radius, sich einander anschließende Radien unterschiedlicher Werte oder ellipsenförmig ausgestaltet sein. Auch sind Wandungselemente möglich, die aus Freiformflächen aufgebaut sind.

Es ist weiterhin realisierbar, dass die erfindungsgemäße Vorrichtung zur Aufnahme, Speicherung und Abgabe von fließ- oder schüttfähigen Substanzen eine von der Kreisform abweichende Ringform, zum Beispiel eine Ellipsenform, aufweist. Weitere Ausgestaltungen im Sinne einer Formgebung als Endlosschlauch sind möglich. Bei allen Ausführungsformen können Anbauteile oder Elemente, beispielsweise Transportösen, Anschlussflächen, Einstiegsöffnungen, Inspektionsöffnungen oder Anschlussbutzen usw. Verwendung finden. Bei besonders großen Tankvolumina kann wenigstens eine Trennstelle an wenigstens einer Übergangsstelle von Wandungselemente zu Wandungselemente vorgesehen sein. In diesem Fall wird jedoch der mit der Einstückigkeit erzielte Vorteil fehlender Trennstellen aufgegeben.

Die Erfindung wird nachfolgend mit Bezug auf die Figuren erläutert. Im Einzelnen zeigen:
- Fig. 1: eine Vorrichtung zur Aufnahme, Speicherung und Abgabe von Substanzen für den Einbau in das Erdreich in einer ersten bevorzugten Ausführungsform. Die Vorrichtung ist torusförmig ausgeführt, die Wölbungen der Wandungselemente weisen einen unterschiedlichen Wölbungsradius auf,
- Fig. 2: eine Vorrichtung zur Aufnahme, Speicherung und Abgabe von Substanzen für den Einbau in das Erdreich in einer abgewandelten ersten bevorzugten Ausführungsform. Die Vorrichtung ist torusförmig ausgeführt, die Wölbungen der Wandungselemente weisen einen identischen Wölbungsradius auf. Exemplarisch sind Anbauteile dargestellt,
- Fig. 3: eine Vorrichtung zur Aufnahme, Speicherung und Abgabe von Substanzen für den Einbau in das Erdreich in einer abgewandelten zweiten bevorzugten Ausführungsform. Die Vorrichtung ist quasi-ovalförmig ausgeführt, die Wölbungen der Wandungselemente weisen unterschiedliche Wölbungsradien auf,
- Fig. 4: eine zylinderisch geformte Vorrichtung in einer konstruktiven Realisierung als Erdtank,
- Fig. 5: vereinfachte Skizzen zur Veranschaulichung einer Ableitung der vertikalen Gewichtskraft auf den Behälter durch dessen Wandung in das Erdreich,
- Fig. 6: eine schematische Darstellung von Wandelementen mit gewölbten Mantelflächen,
- Fig. 7: Skizzen zur Veranschaulichung eines Ineinanderschiebens von Wandelementen,
- Fig. 8: Skizzen zur Veranschaulichung von Wandelementen, die aus Prismen mit gewölbten Mantelflächen ausgebildet sind,
- Fig. 9: weitere Skizzen zur Veranschaulichung einer Verwendung von Wandelementen aus Prismen mit gewölbten Mantelflächen,
- Fig. 10: Skizzen zur Veranschaulichung von unterschiedlich stark gewölbten Mantelflächen der Wandelementen und
- Fig. 11: Skizzen zur Veranschaulichung von Grund- und Deckflächen.

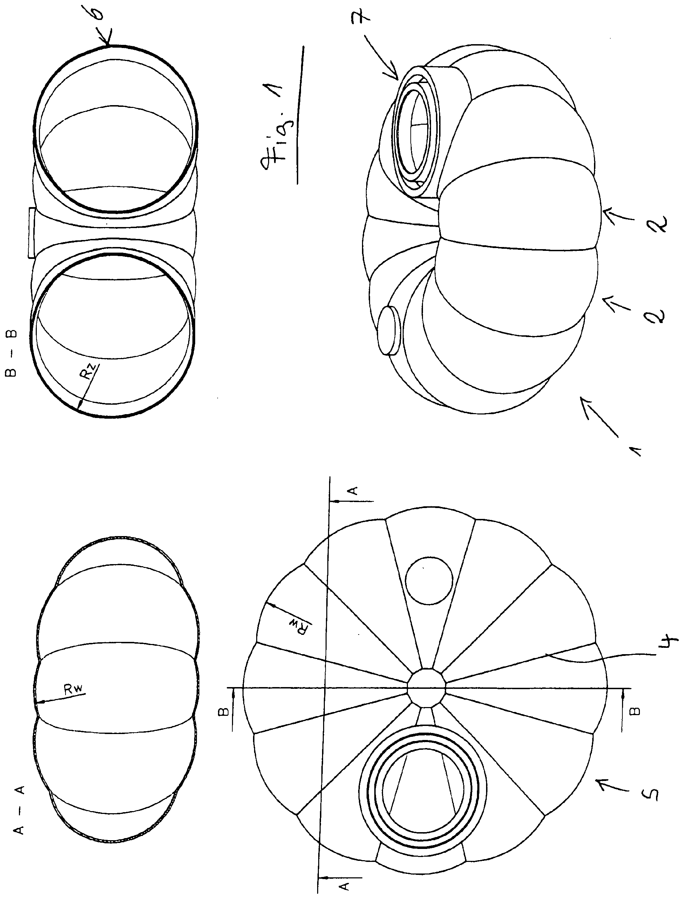

Fig. 1 zeigt eine Vorrichtung zur Aufnahme, Speicherung und Abgabe von Substanzen für den Einbau in das Erdreich 1 in einer ersten bevorzugten Ausführungsform. Hier ist der Tank 1 torusförmig ausgeführt, die Wölbungen 5 der Wandungselemente 2 sind unterschiedlich. Zur Verdeutlichung sind die Wölbungsradien mit RWx und RWx+n angegeben. Innerhalb der torusförmigen, d.h. ringförmigen Ausgestaltung 10 des Tanks 1 ist dieser durch eine Mehrzahl von Wandungselementen 2 gebildet. Dabei weisen die Wandungselemente 2 einen kreisförmigen Querschnitt 6 in axialer Richtung 10 auf. Abhängig von der Art und Ausprägung der Wölbung 5 liegt der maximale Wandungsdurchmesser 6 mit seinem Radius Rz in Axialrichtung eines Wandungselementes 2.

Die Wandungselemente 2 sind jeweils segmentartig ausgebildet und ähnlich zu Tortenstücken zu einer ringförmigen Gestaltung des Tanks 1 zusammengefügt. Die Verwendung des Begriffes des Wölbungsradius bedeutet nicht, dass zwangsläufig eine kreisförmige Geometrie der Wölbung vorliegen muss. Die kreisförmige Gestaltung entspricht lediglich einem Ausführungsbeispiel. Grundsätzlich ist jede Geometrie der Wölbung geeignet, die eine Verzweigung der einwirkenden Druckkräfte unterstützt. Der Tank 1 kann relativ zueinander unterschiedliche Wandungselemente 2 enthalten, wobei die einzelnen Wandungselemente 2 insbesondere relativ zueinander unterschiedliche Wölbungsradien aufweisen. Der in Fig. 1 zu erkennende Radius Rz entspricht dem radialen Durchmesser eines Wandungselementes 2. Auch hier muss die Geometrie des Wandungselementes 2 nicht kreisförmig sein.

Die Wandungselemente 2 verfügen in der dargestellten Form im Tankquerschnitt über eine Kreisgeometrie und weisen eine kreisförmige Übergangsstelle 4 mit Kreisquerschnitt auf. Alternativ können die Wandungselemente 2 jeweils aus einem Teilelement eines sphärischen Zweieckes gebildet werden.

Fig. 1 zeigt die Vorrichtung 1 mit gleichmäßig über dem Umfang verteilten Wandungselementen 2, dadurch besitzt jedes Wandungselement 2 über dem Kreisumfang einen gleichgroßen Kreisbogen. Es ist möglich, dass die Wandungselemente 2 in Umfangsrichtung der torusförmigen Vorrichtung in unterschiedlichen Größen ausgeführt sind, d.h. die Wandungselemente 2 sind längs der Tankmittelinie wenigstens teilweise asymmetrisch.

Weiterhin ist es möglich, dass die Wandungselemente 2 aus vollständigen sphärischen Zweiecken gebildet sind, so dass es im Kreismittelpunkt der Vorrichtung 1 eine weitere Verbindungsstelle gibt. In diesem Fall wäre der Innendurchmesser Di des Tanks 1 null. Es möglich, diese Verbindungsstelle im Kreismittelpunkt durch eine Strebe innerhalb des Tanks 1 auszuführen und dadurch die Druckfestigkeit nochmals zu steigern.

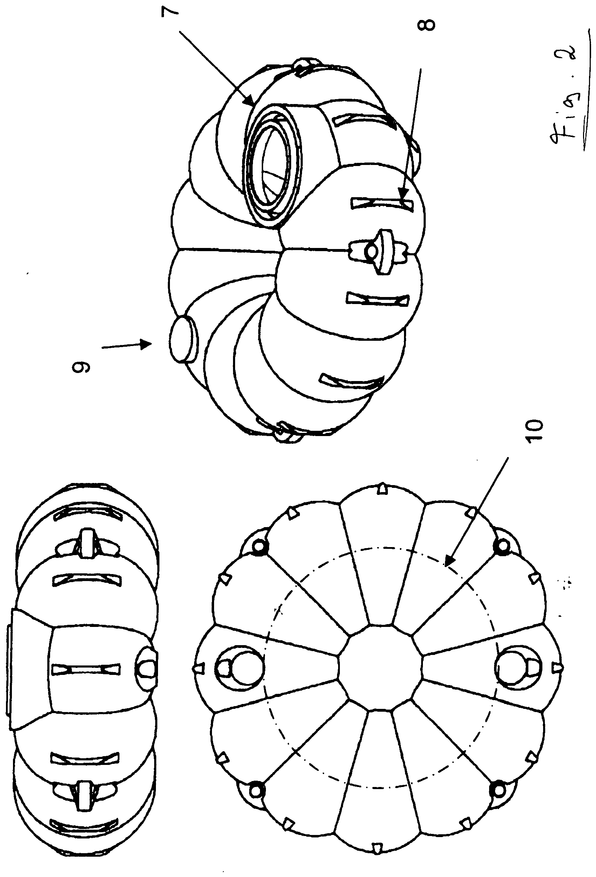

Fig. 2 zeigt eine Vorrichtung 1 zur Aufnahme, Speicherung und Abgabe von Substanzen für den Einbau in das Erdreich in einer abgewandelten ersten bevorzugten Ausführungsform. Die Vorrichtung 1 ist torusförmig ausgeführt, die Wölbungen 5 der Wandungselemente 2 weisen einen identischen Wölbungsradius RWx auf. Exemplarisch sind Anbauteile in Form von Inspektionsöffnung 7, Transportösen 8 und Anlageflächen 9 dargestellt.

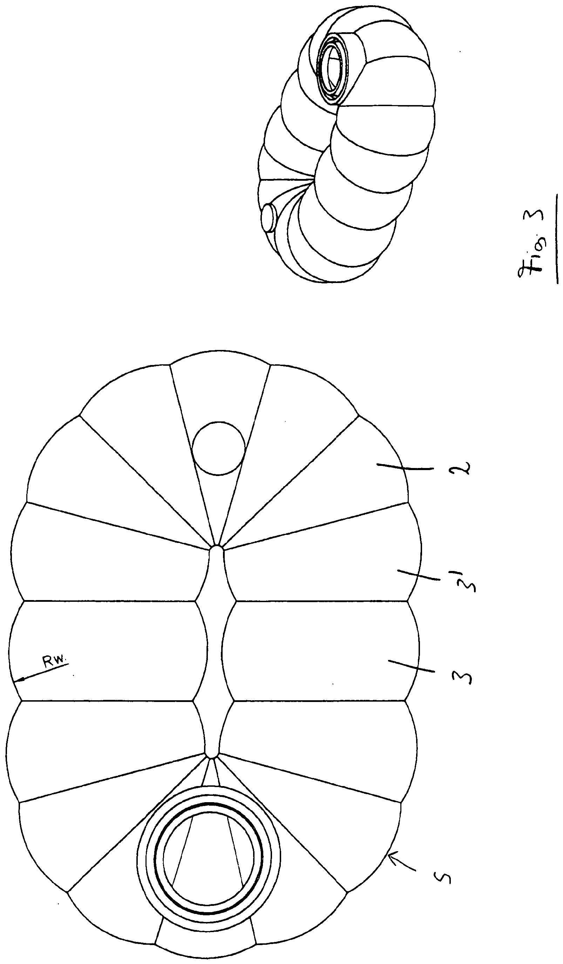

Fig. 3 zeigt eine Vorrichtung 1 zur Aufnahme, Speicherung und Abgabe von Substanzen für den Einbau in das Erdreich in einer abgewandelten zweiten bevorzugten Ausführungsform. Die Vorrichtung 1 ist quasi-ovalförmig ausgeführt, die Wölbungen 5 der Wandungselemente 2,3 weisen unterschiedliche Wölbungsradien RWx, RWx+n auf. Innerhalb der längsseitigen Ovalform des Tankes 1 sind Wandungselemente 3, 3' mit zylindrischer und, oder kegelstumpfförmiger Grundgeometrie und gleichen oder ungleichen Wölbungen 5 über dem Umfang des Wandungselementes 3, 3' angeordnet. Neben der dargestellten zweiten bevorzugten Ausführungsform in Quasi-Ovalform sind auch Ellipsenformen mit verschiedenen Längs- und Querradien oder geometrisch ähnlichen Formen möglich.

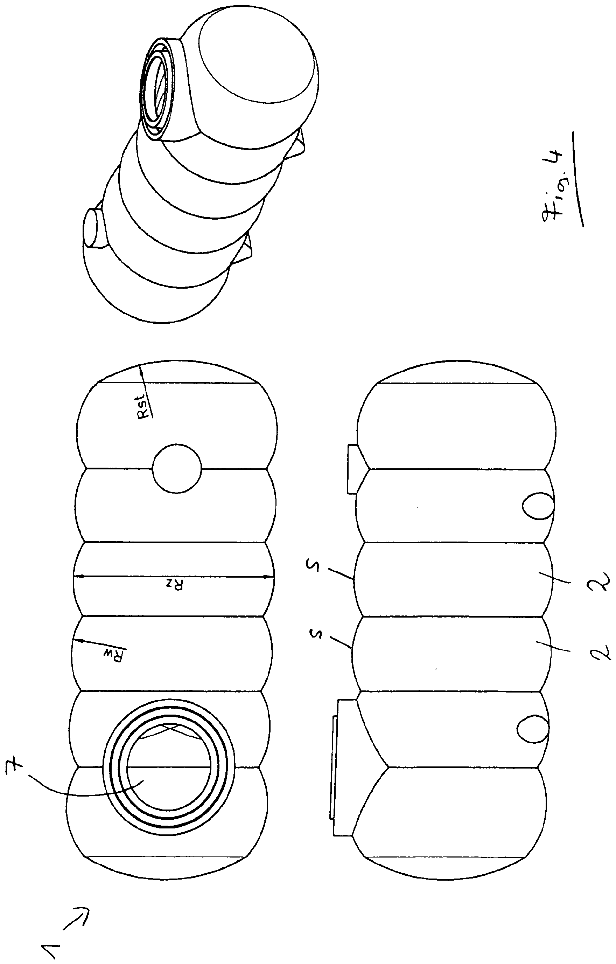

Fig. 4 zeigt eine Vorrichtung 1 in einer zylindrischen Grundkonstruktion. Der Radius Rst bezeichnet eine projektzierte Geometrie der Stirnfläche bei einem länglichen Tank 1, insbesondere beim dargestellten zylindrischen Tank 1. Der Radius Rst ist typischerweise von einer Gestaltung der Wandungselemente 2 unabhängig.

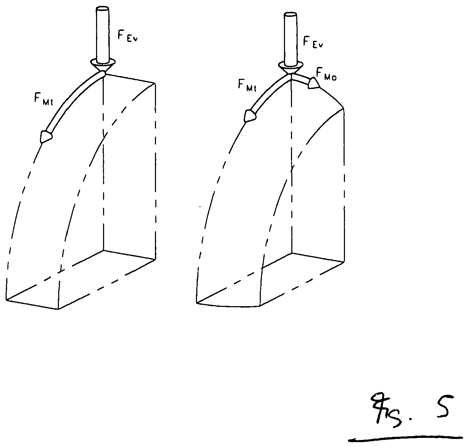

Die Illustration in Fig. 5 zeigt in grober Vereinfachung die Ableitung der vertikalen Gewichtskraft (F_{Ev}) auf dem Behälter durch dessen Wandung in das Erdreich. Die linke Abbildung zeigt, dass die volle Gewichtskraft (F_{Mt}) auf die in axialer Richtung gerade Mantelfläche wirkt und deshalb von einer entsprechend großen radialen Kraftkomponente aufgefangen werden muss. Bei der rechten Abbildung ist zu erkennen, dass die Mantelfläche auch in axialer Richtung gewölbt ist und einen Teil der Gewichtskraft (F_{Ma}) aufnimmt und Fₘₜ damit verkleinert.

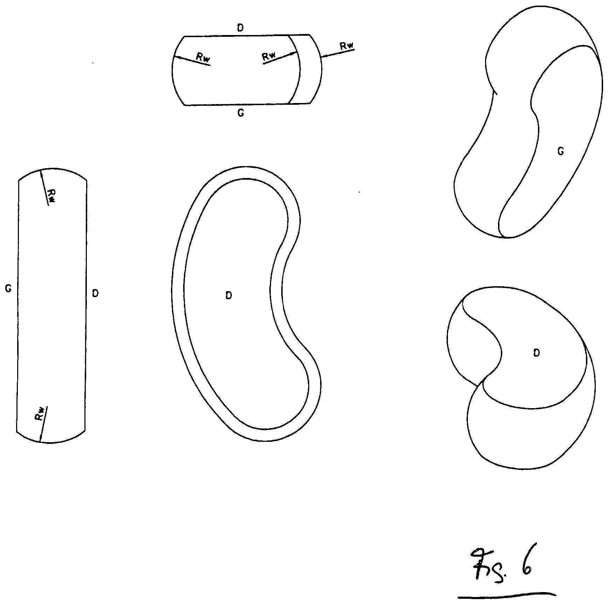

Das in Fig. 5 beschriebene Konstruktionsprinzip wird gemäß Fig. 6 technisch umgesetzt durch Wandelemente, die einem Prisma mit konvex oder konkav gewölbter Mantelfläche (Rw) entsprechen, wobei die Gestaltung von Grundfläche (G) und Deckfläche (D) beliebig ist, solange der technische Zweck erfüllt wird.

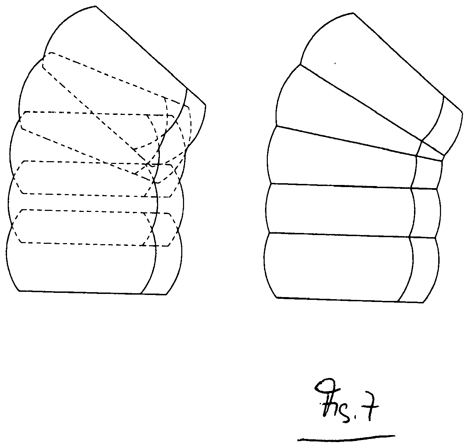

Für die Konstruktion eines Behälters werden gemäß Fig. 7 mehrere Wandelemente in einander geschoben, auch verdreht.

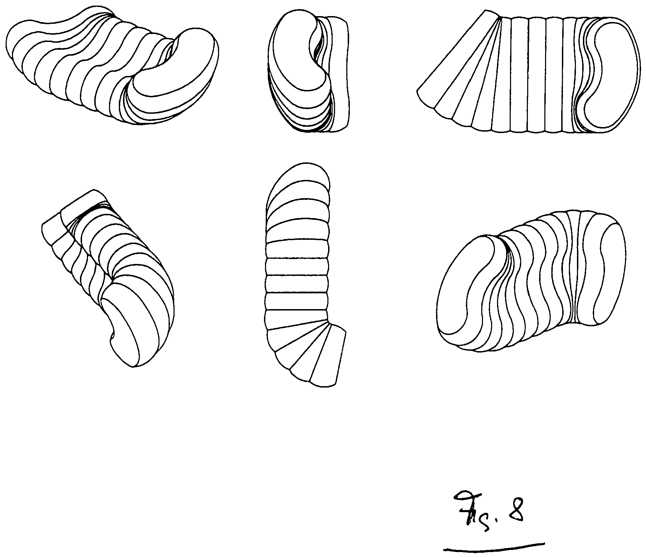

Die Konstruktionsweise mit Wandelementen aus Prismen mit gewölbten Mantelflächen gemäß Fig. 8 erlaubt vielfältige Behälterformen mit hohen Stabilitätswerten.

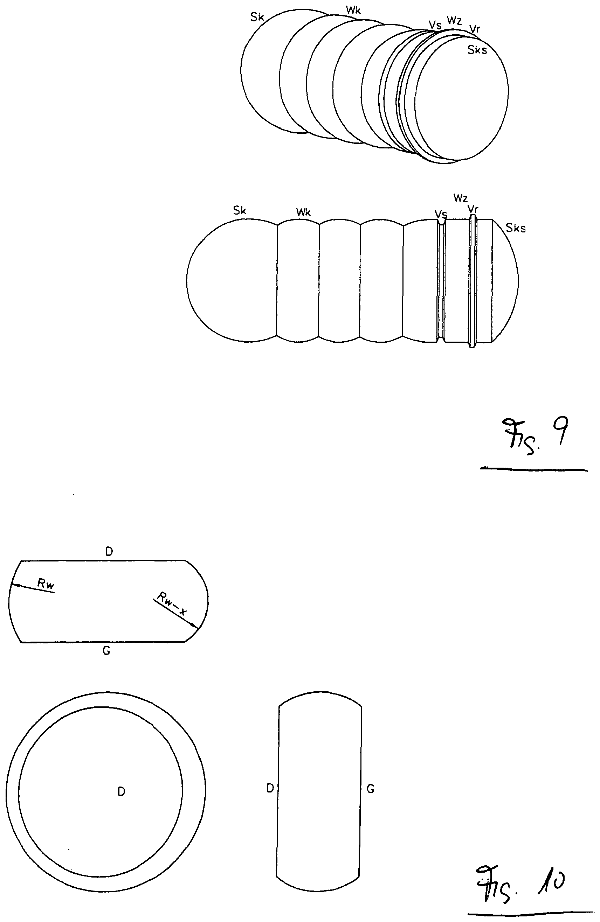

Die Konstruktionsweise mit Wandelementen aus Prismen mit gewölbten Mantelflächen ist gemäß Fig. 9 auch mit "klassischen" Behälterformen kombinierbar. Die verwendeten Abkürzungen haben die folgenden Bedeutungen:
Sk: Stirnfläche kugelförmig,
Wk: Wandelement konvex,
Vs: Versteifungssicke,
Vr: Versteifungsrippe,
Wz: Wandelement zylindrisch und
Sks: Stirnseite Kugelsegment.

Die Mantelflächen der Wandelemente können auch gemäß Fig. 10 unterschiedlich stark gewölbt sein. Die verwendeten Abbildungen haben die folgenden Bedeutungen:
Rw: Wölbungsradius und
Rw-x: kleinerer Wölbungsradius.

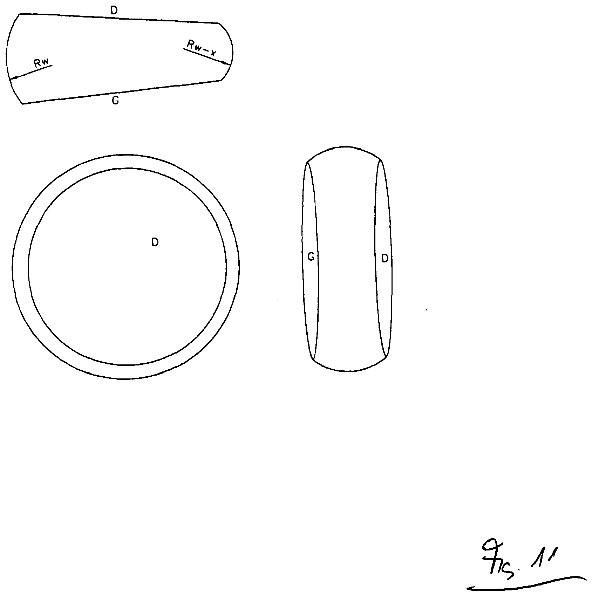

Grund- und Deckfläche können gemäß Fig. 11 auch nicht parallel sein. Die verwendeten Abkürzungen haben die folgenden Bedeutungen:
Rw: Wölbungsradius und
Rw-x: kleinerer Wölbungsradius.

## Patentansprüche

1. Vorrichtung (1) zur Aufnahme, Speicherung und Abgabe von Substanzen für den Einbau in das Erdreich, aufweisend wenigstens zwei Wandungselemente (2, 3, 3') zur Bildung eines Hohlraumes, wobei die Wandungselemente (2, 3, 3') an ihrer Wandungsfläche wenigstens abschnittsweise Wölbungen (5) mit einem Krümmungsradius Rw aufweisen, wobei die Wandungselemente (2, 3, 3') aus Kunststoff bestehen und einteilig konstruiert sind und die Vorrichtung mit einer Inspektionsöffnung (7) versehen ist, **dadurch gekennzeichnet, dass** entlang eines Außenumfanges der Vorrichtung (1) die Wölbungen (5) der einzelnen Wandungselemente (2, 3, 3') mit dem Krümmungsradius Rw winklig gegeneinander stoßen.

2. Vorrichtung (1) nach Anspruch 1, **dadurch gekennzeichnet, dass** die Wölbung (5) der Wandungselemente (2, 3, 3') konvex oder konkav ist.

3. Vorrichtung (1) nach Anspruch 2, **dadurch gekennzeichnet, dass** die Wölbung (5) der Wandungselemente (2, 3, 3') durch einen Kreisbogen mit konstantem oder veränderlichem Wölbungsradius RWx gebildet ist.

4. Vorrichtung (1) nach Anspruch 2, **dadurch gekennzeichnet, dass** die Wölbung (5) der Wandungselemente (2, 3, 3') durch wenigstens zwei Wölbungsabschnitte aufweisend unterschiedliche Wölbungsradien RWx gebildet sind.

5. Vorrichtung (1) nach Anspruch 1, **dadurch gekennzeichnet, dass** die Wandungselemente (2, 3, 3') eine zylindrische und, oder kegelstumpfförmige Grundgeometrie aufweisen.

6. Vorrichtung (1) nach Anspruch 1, **dadurch gekennzeichnet, dass** die Wandungselemente (2, 3, 3') wenigstens teilweise aus einer sphärischen Zweieckgeometrie gebildet sind.

7. Vorrichtung (1) nach einem der vorgehenden Ansprüche, **dadurch gekennzeichnet, dass** die Wandungselemente (2, 3, 3') in einer Schnittebene parallel zur axialen Mittellinie (10) in Größe oder Lage zueinander wenigstens teilweise asymmetrisch sind.

8. Vorrichtung (1) nach einem der vorgehenden Ansprüche, **dadurch gekennzeichnet, dass** die Wandungselemente (2, 3, 3') zueinander eine kreisförmige Kontaktstelle aufweisen.

9. Vorrichtung (1) nach einem der vorgehenden Ansprüche, **dadurch gekennzeichnet, dass** die Wandungselemente (2, 3, 3') derart zueinander angeordnet sind, dass sich die Vorrichtung (1) in wenigstens einer Raumrichtung linear ausdehnt.

10. Vorrichtung (1) nach einem der Ansprüche 1 bis 8, **dadurch gekennzeichnet, dass** die Wandungselemente (2, 3, 3') derart zueinander angeordnet sind, dass die Vorrichtung (1) als torusförmiger oder quasi-ovaler Endlosschlauch ausgebildet ist.

11. Vorrichtung (1) nach Anspruch 10, **dadurch gekennzeichnet, dass** ein Innendurchmesser Di null ist.

12. Vorrichtung (1) nach Anspruch 11, **dadurch gekennzeichnet, dass** im inneren Mittenbereich der Vorrichtung (1) eine Stützstrebe angeordnet ist.

13. Vorrichtung (1) nach Anspruch 1, **dadurch gekennzeichnet, dass** die Wandungselemente (2, 3, 3') einstückig ohne Trennstellen ausgebildet sind.

14. Vorrichtung (1) nach Anspruch 1, **dadurch gekennzeichnet, dass** die Wandungselemente (2, 3, 3') an ihren Kontaktstellen (4) zueinander wenigstens eine Trennstelle aufweisen oder innerhalb eines Wandungselements (2, 3, 3') wenigstens eine Trennstelle vorgesehen ist.

15. Vorrichtung (1) nach einem der vorgehenden Ansprüche, **dadurch gekennzeichnet, dass** die Wandungselemente (2, 3, 3') aus Polyethylen gebildet sind.

16. Vorrichtung (1) nach einem der vorgehenden Ansprüche **dadurch gekennzeichnet, dass** die Vorrichtung eine Substanz aufweist, die Wasser ist.

17. Vorrichtung (1) nach einem der vorgehenden Ansprüche, **dadurch gekennzeichnet, dass** die Anbauteile, in Form von Inspektionsöffnung (7), Transportösen (8) oder Anlageflächen (9) einteilig mit den die Vorrichtungswandung bildenden Wandungselementen (2, 3, 3') ausgeführt sind.

18. Vorrichtung (1) nach einem der vorhergehenden Ansprüche, **dadurch gekennzeichnet, dass** die Wandelemente einen Konturverlauf entsprechend eines Prismas mit konvexer oder konkav gewölbter Mantelfläche aufweisen.

## Claims

1. Device (1) for receiving, storing and dispensing substances that is intended for installation into the ground, having at least two wall elements (2, 3, 3') for forming a cavity, wherein the wall elements (2, 3, 3') have, on their wall surface, at least in certain portions, curvatures (5) with a radius of curvature Rw, wherein the wall elements (2, 3, 3') consist of plastic and are constructed in one part, and the device is provided with an inspection opening (7), **characterized in that** the curvatures (5) of the individual wall elements (2, 3, 3') with the radius of curvature Rw butt against one another at an angle along an outer circumference of the device (1).

2. Device (1) according to Claim 1, **characterized in that** the curvature (5) of the wall elements (2, 3, 3') is convex or concave.

3. Device (1) according to Claim 2, **characterized in that** the curvature (5) of the wall elements (2, 3, 3') is formed by a circular arc with a constant or variable radius of curvature RWx.

4. Device (1) according to Claim 2, **characterized in that** the curvature (5) of the wall elements (2, 3, 3') is formed by at least two curvature portions having different radii of curvature RWx.

5. Device (1) according to Claim 1, **characterized in that** the wall elements (2, 3, 3') have a cylindrical and/or frustoconical basic geometry.

6. Device (1) according to Claim 1, **characterized in that** the wall elements (2, 3, 3') are at least partially formed from a spherical digon geometry.

7. Device (1) according to one of the preceding claims, **characterized in that** the wall elements (2, 3, 3') are at least partially asymmetrical to one another in size or position in a section plane parallel to the axial centre line (10).

8. Device (1) according to one of the preceding claims, **characterized in that** the wall elements (2, 3, 3') have a circular contact point with respect to one another.

9. Device (1) according to one of the preceding claims, **characterized in that** the wall elements (2, 3, 3') are arranged with respect to one another in such a way that the device (1) extends linearly in at least one spatial direction.

10. Device (1) according to one of Claims 1 to 8, **characterized in that** the wall elements (2, 3, 3') are arranged with respect to one another in such a way that the device (1) is formed as a toroidal or quasi-oval endless tube.

11. Device (1) according to Claim 10, **characterized in that** an inside diameter Di is zero.

12. Device (1) according to Claim 11, **characterized in that** a supporting strut is arranged in the inner centre region of the device (1).

13. Device (1) according to Claim 1, **characterized in that** the wall elements (2, 3, 3') are formed in one piece without separating points.

14. Device (1) according to Claim 1, **characterized in that** the wall elements (2, 3, 3') have at least one separating point at their contact points (4) to one another, or at least one separating point is provided within a wall element (2, 3, 3').

15. Device (1) according to one of the preceding claims, **characterized in that** the wall elements (2, 3, 3') are formed from polyethylene.

16. Device (1) according to one of the preceding claims, **characterized in that** the device contains a substance which is water.

17. Device (1) according to one of the preceding claims, **characterized in that** the attachment parts, in the form of an inspection opening (7), transport lugs (8) or bearing surfaces (9), are configured in one part with the wall elements (2, 3, 3') forming the device wall.

18. Device (1) according to one of the preceding claims, **characterized in that** the wall elements have a contour profile corresponding to a prism having a lateral surface curved in a convex or concave manner.

## Revendications

1. Dispositif (1) de réception, de stockage et de distribution de substances destiné à être enterré dans le sol, présentant au moins deux éléments de paroi (2, 3, 3') pour la formation d'une cavité, dans lequel les éléments de paroi (2, 3, 3') présentent sur leur face de paroi au moins localement des courbures (5) avec un rayon de courbure Rw, dans lequel les éléments de paroi (2, 3, 3') sont constitués de matière plastique et sont conçus en une seule pièce et le dispositif est doté d'une ouverture d'inspection (7), **caractérisé en ce que** le long d'une périphérie extérieure du dispositif (1) les courbures (5) des éléments de paroi individuels (2, 3, 3') avec le rayon de courbure Rw butent angulairement l'une contre l'autre.

2. Dispositif (1) selon la revendication 1, **caractérisé en ce que** la courbure (5) des éléments de paroi (2, 3, 3') est convexe ou concave.

3. Dispositif (1) selon la revendication 2, **caractérisé en ce que** la courbure (5) des éléments de paroi (2, 3, 3') est formée par un arc de cercle avec un rayon de courbure RWx constant ou variable.

4. Dispositif (1) selon la revendication 2, **caractérisé en ce que** la courbure (5) des éléments de paroi (2, 3, 3') est formée par au moins deux parties de courbure présentant des rayons de courbure différents RWx.

5. Dispositif (1) selon la revendication 1, **caractérisé en ce que** les éléments de paroi (2, 3, 3') présentent une géométrie de base cylindrique et/ou tronconique.

6. Dispositif (1) selon la revendication 1, **caractérisé en ce que** les éléments de paroi (2, 3, 3') sont formés au moins en partie en une géométrie sphérique à digone.

7. Dispositif (1) selon l'une quelconque des revendications précédentes, **caractérisé en ce que** les éléments de paroi (2, 3, 3') sont au moins partiellement asymétriques l'un par rapport à l'autre, en grandeur ou en position, dans un plan de coupe parallèle à la ligne centrale axiale (10).

8. Dispositif (1) selon l'une quelconque des revendications précédentes, **caractérisé en ce que** les éléments de paroi (2, 3, 3') présentent une zone de contact circulaire l'un à l'autre.

9. Dispositif (1) selon l'une quelconque des revendications précédentes, **caractérisé en ce que** les éléments de paroi (2, 3, 3') sont disposés l'un par rapport à l'autre, de telle manière que le dispositif (1) se dilate linéairement dans au moins une direction de l'espace.

10. Dispositif (1) selon l'une quelconque des revendications 1 à 8, **caractérisé en ce que** les éléments de paroi (2, 3, 3') sont disposés l'un par rapport à l'autre, de telle manière que le dispositif (1) soit réalisé sous forme de tuyau souple sans fin en forme de tore ou quasi-ovale.

11. Dispositif (1) selon la revendication 10, **caractérisé en ce qu'**un diamètre intérieur Di est nul.

12. Dispositif (1) selon la revendication 11, **caractérisé en ce qu'**une entretoise de soutien est disposée dans la région centrale du dispositif (1).

13. Dispositif (1) selon la revendication 1, **caractérisé en ce que** les éléments de paroi (2, 3, 3') sont réalisés d'une seule pièce sans zones de séparation.

14. Dispositif (1) selon la revendication 1, **caractérisé en ce que** les éléments de paroi (2, 3, 3') présentent à leurs zones de contact (4) l'un avec l'autre au moins une zone de séparation ou au moins une zone de séparation est prévue à l'intérieur d'un élément de paroi (2, 3, 3').

15. Dispositif (1) selon l'une quelconque des revendications précédentes, **caractérisé en ce que** les éléments de paroi (2, 3, 3') sont formés en polyéthylène.

16. Dispositif (1) selon l'une quelconque des revendications précédentes, **caractérisé en ce que** le dispositif présente une substance, qui est l'eau.

17. Dispositif (1) selon l'une quelconque des revendications précédentes, **caractérisé en ce que** les éléments ajoutés, sous forme d'ouverture d'inspection (7), oreilles de transport (8) ou faces d'appui (9), sont réalisés d'une seule pièce avec les éléments de paroi (2, 3, 3') formant la paroi du dispositif.

18. Dispositif (1) selon l'une quelconque des revendications précédentes, **caractérisé en ce que** les éléments de paroi présentent un profil de contour correspondant à un prisme avec une face latérale à courbure convexe ou concave.
